# DEMANDE DE BREVET EUROPEEN

(11) **EP 4 501 717 A1**
(43) Date de publication de la demande: **05.02.2025**
(21) Numéro de dépôt: 24184809.2
(22) Date de dépôt: 26.06.2024
(51) Int. Cl.: B60R 22/48

(54) **SYSTEME DE SUPERVISION DU BOUCLAGE D'UNE CEINTURE**

(30) Priorité: 04.08.2023 FR 2308473
(71) Demandeur: BV PRODUCTIONS, 62420 Billy Montigny (FR)
(72) Inventeur: GUILHEM, Jacques, 62420 BILLY-MONTIGNY (FR)
(74) Mandataire: Cabinet Beau de Loménie

(57) **Abrégé**

Système de supervision (10) du bouclage d'une ceinture (108) Système de supervision (10) du bouclage d'une ceinture (108) comprenant au moins un capteur de bouclage (60,60') de ladite ceinture ; au moins un boitier secondaire (40,40') connecté audit capteur de bouclage et comprenant un émetteur sans-fil (44) configuré pour transmettre sans-fil ledit état de bouclage de la ceinture ; un boitier principal (20) comprenant un récepteur sans-fil (22) configuré pour recevoir ledit état de bouclage de la ceinture; un module de géolocalisation (24) configuré pour déterminer des données de positionnement (xₚ) du véhicule et/ou des données de vitesse (vₚ) du véhicule ; et un dispositif d'alerte (26) configuré pour émettre au moins un signal d'alerte en fonction de l'état de bouclage de la ceinture reçu par le récepteur et en fonction des données de positionnement et/ou des données de vitesse du véhicule fournies par le module de géolocalisation.

## Description

### Domaine Technique

La présente invention concerne le domaine technique des systèmes permettant de superviser le bouclage des ceintures de sécurité d'un véhicule. Ces systèmes permettent à un utilisateur, notamment le conducteur du véhicule, de s'assurer du bon bouclage des ceintures des sièges occupés par un passager. De tels systèmes sont particulièrement adaptés pour surveiller l'état de bouclage des ceintures dans une voiture, un utilitaire ou un véhicule de transport en commun tel qu'un car ou un bus. La supervision de l'état de bouclage des ceintures permet d'améliorer la sécurité des passagers en permettant au conducteur de connaitre à chaque instant si les passagers sont correctement attachés.

### Technique antérieure

On connaît des systèmes de supervision du bouclage des ceintures de sécurité d'un véhicule qui sont des systèmes rapportés configurés pour être installés dans un véhicule. Ces systèmes de supervision comprennent une pluralité de capteurs configurés pour être montés sur les sièges et permettant de collecter des informations de bouclage des ceintures. Ces capteurs communiquent avec un module indépendant de l'électronique du véhicule, par exemple avec un smartphone. Le module émet alors des signaux d'alerte visuels ou sonores permettant d'avertir l'utilisateur d'un défaut de bouclage d'une ceinture d'un siège occupé.

Un inconvénient de ces systèmes est qu'ils n'ont pas accès aux données internes du véhicule, telles que sa vitesse de déplacement, la distance parcourue, ou encore l'état allumé ou éteint du moteur. En conséquence, les signaux d'alerte sont émis quel que soit le mode de fonctionnement, la vitesse de déplacement ou la position du véhicule. En particulier, les signaux d'alertes sont émis quand bien même le véhicule serait à l'arrêt, ou s'il roule à petite vitesse, ce qui n'est pas très pertinent et peut s'avérer pénible et provoquer un agacement des occupants du véhicule.

Un autre inconvénient de ces systèmes est qu'ils mettent en oeuvre des technologies de communication entre le module et les capteurs qui ne sont pas permanentes de sorte que la connexion entre ces derniers est régulièrement interrompue.

On connaît également des systèmes de supervision du bouclage des ceintures qui sont directement intégrés au véhicule. Des capteurs positionnés à proximité des sièges permettent de déterminer les états de bouclage des ceintures. Les capteurs communiquent via un réseau filaire avec une unité de contrôle du véhicule, qui permet notamment d'afficher sur le tableau de bord des signaux d'alerte associés à l'état de bouclage des ceintures. L'unité de contrôle du véhicule permet notamment de conditionner l'émission des signaux d'alerte à la vitesse du véhicule, à sa position et/ou à son déplacement.

Un inconvénient de ces systèmes de supervision intégrés selon l'art antérieur est qu'ils ne peuvent pas être utilisés pour superviser l'état de bouclage des sièges de véhicules transformés dans lesquels des sièges supplémentaires sont ajoutés hors usine, ultérieurement à la fabrication du véhicule. Si ces systèmes peuvent être installés et exploités par les constructeurs du véhicule, ils ne sont toutefois pas utilisables par un transformateur de véhicule.

### Exposé de l'invention

Un but de la présente invention est de proposer un système de supervision du bouclage des ceintures de sécurité d'un véhicule remédiant aux inconvénients précités.

Pour ce faire, l'invention porte sur un système de supervision du bouclage d'au moins une ceinture associée à un siège d'un véhicule, ladite ceinture pouvant prendre un état bouclé et un état non-bouclé, le système comprenant :
- au moins un capteur de bouclage configuré pour détecter un état de bouclage de ladite ceinture ;
- au moins un boitier secondaire connecté audit capteur de bouclage, le boitier secondaire comprenant un émetteur sans-fil configuré pour transmettre sans-fil ledit état de bouclage de la ceinture fourni par le capteur de bouclage ;
- un boitier principal configuré pour être positionné à proximité du tableau de bord du véhicule et comprenant :
   un récepteur sans-fil configuré pour recevoir ledit état de bouclage de la ceinture transmis par l'émetteur du boitier secondaire ;
   un module de géolocalisation configuré pour déterminer des données de positionnement du véhicule et/ou des données de vitesse du véhicule ; et
   un dispositif d'alerte configuré pour émettre au moins un signal d'alerte en fonction de l'état de bouclage de la ceinture reçu par le récepteur et en fonction des données de positionnement et/ou des données de vitesse du véhicule fournies par le module de géolocalisation.

Le système de supervision selon l'invention permet de superviser le bouclage d'une ou plusieurs ceinture(s) de sécurité du véhicule, chacune étant associée à un des sièges du véhicule. Le système de supervision permet à un utilisateur, notamment au conducteur du véhicule, d'obtenir des informations, par exemple visuelles ou sonores, relatives à l'état de bouclage d'une ou plusieurs ceinture(s) du véhicule.

Le système de supervision est particulièrement adapté pour superviser le bouclage des ceintures d'une voiture, d'un utilitaire ou encore d'un véhicule de transport en commun, tel qu'un car ou un bus.

Par état de bouclage, on entend un état bouclé ou un état non-bouclé. La ceinture est considérée dans l'état bouclé lorsque la boucle de la ceinture est convenable introduite et connectée à la base de connexion, également appelée pédoncule, fixée au siège. La ceinture est considérée non-bouclée lorsque la boucle de la ceinture n'est pas connectée à la base de connexion fixée au siège.

De préférence, mais de manière non limitative, le système comprend une pluralité de capteurs de bouclage, chacun étant associé à la ceinture de sécurité d'un des sièges et étant configuré pour détecter un état de bouclage de la ceinture correspondante.

Le capteur de bouclage peut être un capteur intégré à la base de connexion, elle-même fixée au siège, un capteur intégré à la boucle de ceinture ou encore un capteur distinct de la base de connexion et de la boucle de ceinture. Le capteur est configuré pour délivrer des données relatives à l'état de bouclage de la ceinture du siège auquel il est associé. De manière non limitative, le capteur de bouclage peut être un capteur de position. Le capteur de bouclage est avantageusement configuré pour détecter un changement de l'état de bouclage de la ceinture.

Le capteur de bouclage communique avec le boitier secondaire, via une communication filaire ou via une communication sans-fil. De manière non limitative, et sans sortir du cadre de l'invention, le capteur de bouclage peut être intégré dans le boitier secondaire.

Sans sortir du cadre de l'invention, plusieurs capteurs de bouclage peuvent être reliés à un seul boitier secondaire. Ledit boitier secondaire est alors apte à traiter les états de bouclage détectés par l'ensemble des capteurs de bouclage qui lui sont reliés.

De préférence, mais de manière non limitative, le boitier secondaire est monté sur le siège. Un intérêt est de pouvoir installer conjointement le siège et le boitier dans le véhicule. Alternativement, le boitier secondaire peut être monté à côté du siège.

Le boitier secondaire comprend avantageusement une carte électronique. De préférence, ledit au moins un boitier secondaire comprend un calculateur configuré pour traiter les données fournies par le capteur de bouclage. Le calculateur communique avantageusement avec ledit émetteur sans-fil.

De préférence, le boitier secondaire comprend un récepteur sans-fil, configuré pour recevoir des signaux émis par le boitier principal. De préférence, le récepteur sans-fil du boitier secondaire est un récepteur d'acquittement configuré pour recevoir un signal d'accusé de réception émis par le boitier principal en réponse à la réception d'un signal émis par l'émetteur sans-fil dudit boitier secondaire.

De préférence, le système de supervision comprend une pluralité de boitiers secondaires, chacun desdits boitiers secondaires étant associé à un des sièges du véhicule, et à la ceinture correspondante.

L'émetteur sans-fil permet de transmettre sans-fil des informations, dont l'état de bouclage de la ceinture, au boitier principal.

L'utilisation d'un émetteur sans-fil permet l'intégration aisée et hors usine du système de supervision sur un véhicule. Ceci permet notamment de s'affranchir de l'installation dans le véhicule de fils reliant le ou les boitier(s) secondaire(s) et le boitier principal disposé près du tableau de bord.

De préférence, ledit émetteur sans-fil est configuré pour transmettre un identifiant propre au boitier secondaire prenant la forme d'une adresse associée au boitier secondaire. Ladite adresse est de préférence une adresse unique permettant d'identifier et de discriminer ledit boitier secondaire. Cette adresse permet le détrompage du boitier secondaire. Cette adresse constitue une clé d'identification. De préférence, cette adresse est cryptée.

De préférence, ledit émetteur sans-fil est configuré pour transmettre au boitier principal des données relatives au niveau de charge d'une batterie électrique alimentant le boitier secondaire.

L'émetteur sans-fil est avantageusement configuré pour transmettre sans-fil des signaux comprenant au moins ledit état de bouclage de la ceinture correspondante. L'émetteur sans-fil est avantageusement configuré pour transmettre des signaux comprenant des trames d'information. Chaque trame d'information transmise comprend avantageusement ledit état de bouclage de la ceinture ainsi que l'adresse associée au boitier secondaire et/ou des données relatives à la charge de la batterie alimentant le boitier secondaire et/ou un indicateur de changement d'état de bouclage de la ceinture et/ou un état d'occupation du siège correspondant.

De préférence, l'émetteur sans-fil est configuré pour émettre un signal, de préférence, un signal crypté, à chaque changement de l'état de bouclage de la ceinture.

De préférence, ledit émetteur sans-fil est configuré pour émettre un signal ayant une portée inférieure à un seuil de portée déterminée. Un intérêt est de réduire la portée du signal émis afin de ne pas perturber un boitier principal d'un autre véhicule. L'émetteur sans-fil est avantageusement configuré pour émettre des signaux dans un rayon de quelques mètres autour dudit capteur de bouclage.

De préférence, l'émetteur sans-fil est configuré pour émettre au moins un signal, de préférence un signal crypté, indiquant le niveau de charge de la batterie. De préférence, l'émetteur sans fil est configuré pour émettre de tels signaux indiquant la charge de la batterie à intervalle de temps prédéfini.

Ce signal indiquant le niveau de charge de la batterie est avantageusement distinct du signal contenant l'état de bouclage de la ceinture.

De préférence, le boitier principal est fixé au véhicule à proximité du tableau de bord. Le boitier principal est avantageusement fixé de manière permanente au véhicule, à proximité du tableau de bord. Par fixé de manière permanente, on entend que le boitier est monté au véhicule de sorte qu'il ne peut pas être démonté sans utilisation d'un outil adapté ou en exerçant un effort significatif pour le détacher.

Le boitier principal est de préférence configuré pour être monté, encore de préférence fixé, préférentiellement de manière permanente, au tableau de bord du véhicule. De préférence, le boitier principal comprend un dispositif de montage permettant son montage au tableau de bord du véhicule, ou au voisinage du tableau de bord.

De préférence, le boitier principal est de forme parallélépipédique. De préférence, le boitier principal est d'un format réduit. Le boitier principal est avantageusement disposé de manière à ce que les alertes visuelles soient visibles par le conducteur du véhicule mais que ledit boitier ne vienne pas occulter son champ visuel. De préférence, le système de supervision comprend un unique boitier principal.

De préférence, le boitier principal est alimenté en énergie électrique par la batterie du véhicule. Un intérêt est de permettre d'alimenter le boitier principal en continu. De préférence, le boitier principal est apte à recevoir des signaux et émettre des signaux d'alerte à tout instant, que le véhicule soit en fonctionnement ou à l'arrêt.

De préférence, le boitier principal est connecté de manière permanente à ladite batterie du véhicule. Le boitier principal est avantageusement configuré pour être alimenté de manière permanente par la batterie du véhicule. Un intérêt est de permettre la communication entre le boitier principal et le ou les boitier(s) secondaire(s) à tout instant, quand bien même le moteur du véhicule serait à l'arrêt. Autrement dit, le boitier principal est connecté à une borne positive dite « avant contact » de la batterie du véhicule, de sorte qu'il est alimenté malgré l'arrêt du moteur du véhicule. Un intérêt est de maintenir certaines fonctions accessibles malgré l'arrêt du moteur du véhicule et de permet d'alimenter des mémoires du boitier principal afin de conserver les informations qu'elles stockent. Ceci permet en outre de s'affranchir de besoins d'appairage ou de connexion nécessaires à chaque utilisation de smartphones tel qu'utilisés dans l'art antérieur.

De préférence, le module de géolocalisation du boitier principal présente une mémoire qui est alimentée de manière permanente par la batterie du véhicule. Un intérêt est de permet de conserver en mémoire les informations de position du véhicule.

De préférence, le récepteur sans-fil du boitier principal est alimenté de manière permanente par la batterie du véhicule. Un intérêt est de permettre de recevoir et traiter l'état de bouclage de la ceinture malgré l'arrêt du moteur du véhicule.

De préférence, le dispositif d'alerte du boitier principal n'est pas alimenté lorsque le moteur du véhicule est à l'arrêt. Autrement dit, le dispositif d'alerte est avantageusement connecté à une borne positive dite « après contact » de la batterie du véhicule, de sorte qu'il n'est alimenté qu'après allumage du moteur du véhicule.

Avantageusement, le boitier principal est configuré pour passer dans un mode de veille lorsque le moteur du véhicule est à l'arrêt, ledit boitier principal restant alimenté en énergie électrique par la batterie du véhicule lorsqu'il est amené dans le mode de veille.

De préférence, dans le mode de veille, le dispositif d'alerte du boitier principal n'est pas alimenté en énergie électrique. De préférence, le module de géolocalisation présente une mémoire qui est alimentée par la batterie du véhicule lorsque le boitier principal est dans le mode de veille.

De préférence, le boitier principal est configuré pour détecter une mise en fonctionnement du véhicule. Le boitier principal est avantageusement configuré pour quitter le mode de veille à la mise en fonctionnement du véhicule.

Sans sortir du cadre de l'invention, le boitier principal peut comprendre une batterie qui lui est propre, configurée pour alimenter le boitier principal en énergie électrique.

De préférence, le boitier principal fonctionne de manière continue. Le boitier principal présente avantageusement un mode de mise en veille.

Le récepteur sans-fil du boitier principal est configuré pour recevoir des signaux transmis par l'émetteur sans-fil du ou des boitier(s) secondaire(s).

De préférence, le récepteur sans-fil est configuré pour recevoir des signaux émis par des émetteurs sans-fils de boitiers secondaires situés dans un volume environnant inférieur à un volume prédéterminé. Un intérêt est de ne pas recevoir des signaux provenant d'autres véhicules. Le volume prédéterminé peut avantageusement être ajusté par paramétrage en fonction du véhicule équipé.

De préférence, le boitier principal et le ou les boitier(s) secondaire(s) sont configurés de manière à ce que les signaux émis par les émetteurs des boitiers secondaires soient décodables et puissent être lus par le boitier principal et que les signaux émis par le boitier principal soient décodables et puissent être lus par les boitiers secondaires.

De préférence, le boitier principal et les boitiers secondaires communiquent selon une configuration en étoile.

Le récepteur sans-fil du boitier principal est avantageusement configuré pour transmettre le ou les état(s) de bouclage reçu(s) au dispositif d'alerte du boitier principal.

De préférence, le récepteur sans-fil du boitier principal est configuré pour transmettre l'état de bouclage au dispositif d'alerte uniquement lorsque le signal reçu permet d'identifier le boitier secondaire l'ayant émis, par exemple via l'adresse unique contenue dans la trame d'information du signal.

Le récepteur sans-fil du boitier principal est avantageusement configuré pour ne transmettre au dispositif d'alerte que les états de bouclage pouvant être identifiés ou compris.

De préférence, le boitier principal comprend en outre un émetteur d'accusé de réception sans-fil, configuré pour émettre un signal d'accusé de réception à destination dudit boitier secondaire.

De préférence, à la réception d'un signal émis par l'émetteur sans-fil, le boitier principal est configuré pour émettre un signal d'accusé de réception à destination dudit boitier secondaire. Suite à l'émission d'un signal par le boitier secondaire, en l'absence de réception d'un signal d'accusé de réception par le boitier secondaire, ce dernier est avantageusement configuré pour transmettre à nouveau l'état de bouclage de la ceinture correspondante en direction du boitier principal.

De préférence, à défaut de réception de ce signal d'accusé de réception, le boitier secondaire est configuré pour émettre à plusieurs reprises le signal contenant l'état de bouclage de la ceinture.

Selon une variante avantageuse, chaque signal pouvant être traité par le dispositif d'alerte du boitier principal fait l'objet, par le boitier principal, de l'émission d'un signal d'accusé de réception détectable par le boitier secondaire ayant émis le signal d'origine.

Le boitier principal comprend avantageusement une carte électronique reliée électroniquement audit dispositif d'alerte, audit récepteur sans-fil et audit module de géolocalisation. Ladite carte est avantageusement alimentée électriquement par une batterie ou une liaison filaire.

Le module de géolocalisation, par exemple un module GPS ou GNSS, permet de déterminer la position du boitier principal, et plus généralement du véhicule, considérée dans le référentiel terrestre. Il permet également de déterminer la trajectoire et la vitesse de déplacement du véhicule, à partir de la position du véhicule.

Le module de géolocalisation est avantageusement configuré pour fournir soit les données de positionnement du véhicule, soit les données de vitesse du véhicule soit les deux. Le module de géolocalisation est avantageusement configuré pour fournir la trajectoire du véhicule.

Le module de géolocalisation est propre au boitier principal et au système de supervision. Il est distinct d'un éventuel module de géolocalisation du véhicule.

Les données de vitesse du véhicule comprennent avantageusement la vitesse de déplacement du véhicule à un instant donné.

Les données de positionnement du véhicule comprennent avantageusement la position du véhicule à un instant donné.

De préférence, le dispositif d'alerte est configuré pour émettre le signal d'alerte en fonction de la position parcourue par le véhicule par rapport à une position de référence, calculée à partir desdites données de position. Les données de positionnement permettent au dispositif d'alerte de déterminer une distance parcourue par le véhicule par rapport à une position de référence.

Le dispositif d'alerte comprend avantageusement une unité de calcul configurée pour traiter le ou les état(s) de bouclage fourni(s) par le récepteur sans-fil. L'unité de calcul est avantageusement configurée pour traiter les changements d'état de bouclage ou encore les états d'occupation du ou des siège(s).

Le ou les signaux d'alerte émis par le dispositif d'alerte permettent d'indiquer notamment au conducteur que la ceinture associée au boitier secondaire n'est pas bouclée. Ceci permet au conducteur de s'assurer du bon bouclage des ceintures et de demander aux passagers d'attacher leurs ceintures si ce n'est pas le cas.

Avantageusement, le ou les signaux d'alerte émis par le dispositif d'alerte sont fonction de l'ensemble des état(s) de bouclage reçu(s) par le récepteur sans-fil.

Ledit dispositif d'alerte est avantageusement configuré pour discriminer les états de bouclage fournis par le récepteur sans-fil. Plus précisément, le dispositif d'alerte est configuré pour identifier le boitier secondaire associé à chacun des états de bouclage reçus, par exemple grâce à un indicateur, tel qu'une adresse unique propre au boitier secondaire, contenu dans la trame du signal reçu par le récepteur sans-fil.

De préférence, le dispositif d'alerte est configuré pour émettre un signal d'alerte qui est fonction du boitier secondaire ayant transmis l'état de bouclage. Le signal d'alerte est donc avantageusement différent en fonction de la ceinture concernée par le signal d'alerte. Le dispositif d'alerte est par exemple configuré pour afficher un signal visuel différent en fonction de la ceinture qui n'est pas bouclée.

Alternativement, et sans sortir du cadre de l'invention, le dispositif d'alerte est configuré pour émettre un signal d'alerte, par exemple un signal d'alerte sonore, qui est identique quelle que soit la ceinture qui n'est pas bouclée.

De préférence, l'émission du signal d'alerte est conditionnée par lesdites données de positionnement du véhicule et/ou lesdites données de vitesse du véhicule, fournies par le module de géolocalisation.

Alternativement, et sans sortir du cadre de l'invention, le signal d'alerte peut être différent en fonction desdites en fonction des données de positionnement et/ou desdites données de vitesse du véhicule fournies par le module de géolocalisation.

De préférence, mais de manière non limitative, le dispositif d'alerte est configuré pour interrompre l'émission du signal d'alerte lorsque l'état de bouclage de la ceinture reçu, transmis via lesdits émetteur et récepteur, est de type bouclé.

De préférence, le dispositif d'alerte est configuré pour émettre à nouveau le signal d'alerte, après une durée prédéterminée, si la ceinture n'est toujours pas bouclée.

Grâce à l'invention, le ou les signaux d'alerte, et avantageusement leur émission, sont conditionnés par la vitesse et/ou la position du véhicule. Un intérêt est de ne pas émettre de signaux d'alerte à chaque instant, sans tenir compte de la position ni de la vitesse du véhicule. Selon l'invention, la nature des signaux d'alerte ou leur émission est conditionnée par lesdites données de vitesse et de positionnement du véhicule. Ceci peut permettre par exemple de ne pas émettre de signal d'alerte si le véhicule est à l'arrêt ou roule à très petite vitesse. Le confort des utilisateurs est donc amélioré et n'est pas perturbé par des signaux superflus. Les informations fournies au conducteur sont en outre plus pertinentes et précises.

Dans la mesure où le boitier principal intègre un module de géolocalisation, le système de supervision permet de s'affranchir du besoin d'accéder à des données déterminées par des capteurs et autres modules de géolocalisation propres au véhicule.

Le système de supervision selon l'invention présente donc l'avantage de ne pas nécessiter d'accès aux données internes du véhicule, notamment aux données de positionnement et de vitesse déterminées par les capteurs du véhicule.

Le système de supervision peut par conséquent être installé dans tous types de véhicules, et notamment dans un véhicule transformé dans lequel des sièges équipés de ceintures ont été ajoutés hors usine, après fabrication. Pour ce faire, le boitier principal peut aisément être monté à proximité du tableau de bord tandis que le ou les boitier(s) secondaire(s) peuvent être aisément monté à proximité ou sur les sièges correspondants. Le ou les capteur(s) de bouclage peuvent également être mis en place aisément pour permettre de détecter l'état de bouclage de la ceinture correspondante.

Un autre avantage du système de supervision selon l'invention est qu'il peut être installé à demeure dans le véhicule, de sorte que la communication entre le boitier principal et le ou les boitier(s) secondaire(s) n'est pas interrompue chaque fois que l'utilisateur sort du véhicule, comme cela est le cas pour le système mettant en oeuvre un smartphone. Aucune configuration n'est nécessaire pour l'utilisateur entrant dans le véhicule. La supervision peut être réalisée de manière permanente, que le moteur soit allumé ou non. La supervision est donc fiable et n'est pas interrompue, ce qui améliore la sécurité des passagers.

Le système de supervision peut avantageusement être installé dans le véhicule sans difficulté. En outre, la configuration du système de supervision est réalisée une fois, lors de l'installation. Une fois installé, il n'est plus nécessaire de configurer le système de supervision à chaque utilisation. De plus, dans la mesure où il peut être monté au tableau de bord, l'utilisateur peut consulter les informations, notamment les signaux d'alerte visuels, affichés par le boitier principal, sans qu'il ne soit nécessaire de tenir ce dernier dans les mains. La sécurité du conducteur et des passagers est donc améliorée.

De préférence, le boitier principal est configuré pour être alimenté en énergie électrique par la batterie du véhicule. De préférence, le boitier principal est configuré pour être alimenté en énergie électrique de manière continue. Un intérêt est de permettre l'émission de signaux d'alerte à chaque instant, et ainsi améliorer la sécurité des utilisateurs.

De préférence, le boitier principal est configuré pour être alimenté en énergie électrique de manière continue par la batterie du véhicule.

De préférence, le dispositif d'alerte est configuré pour émettre le signal d'alerte lorsque la ceinture est à l'état non-bouclé et que la vitesse du véhicule, déterminée à partir des données de vitesse du véhicule fournies par le module de géolocalisation, est supérieure à un seuil de vitesse prédéterminé et/ou que la distance parcourue par le véhicule, déterminée à partir des données de positionnement du véhicule fournies par le module de géolocalisation, par rapport à une position de référence, est supérieure à un seuil de distance prédéterminé.

De préférence, ce seuil de vitesse est non nul. Avantageusement, ledit dispositif d'alerte est configuré pour émettre le signal d'alerte lorsque la ceinture est à l'état non-bouclé et que la vitesse du véhicule, déterminée à partir des données de vitesse du véhicule fournies par le module de géolocalisation, est supérieure à 5 km/h.

Un intérêt est de n'émettre le signal d'alerte que si le véhicule roule à une vitesse au-delà de laquelle l'absence de port de la ceinture de sécurité est dangereux. Un intérêt est encore de n'émettre le signal d'alerte que si le véhicule s'est déplacé sur une distance significative par rapport à la position de référence. Ceci permet par exemple de ne pas émettre de signal d'alerte en cas de déplacement d'une courte distance sur un parking ou dans une allée de garage.

On comprend que la ceinture est considérée à l'état non-bouclé lorsque le module d'alerte reçoit, en provenance du récepteur, un signal contenant l'état de bouclage de la ceinture qui est de type non-bouclé.

La position de référence est de préférence la position initiale du véhicule, au démarrage du moteur.

De manière non limitative, la vitesse du véhicule peut découler directement des données de vitesse du véhicule fournies par le module de géolocalisation ou être obtenue par traitement desdites données de vitesse.

De préférence, le seuil de vitesse prédéterminé est choisi comme correspondant à une vitesse de déplacement au-delà de laquelle le véhicule est considéré comme roulant normalement sur la voie publique, hors parking. Le seuil de vitesse prédéterminé est avantageusement fonction des normes de sécurité routière en vigueur.

De préférence, le dispositif d'alerte est configuré pour émettre le signal d'alerte uniquement lorsque la vitesse du véhicule est supérieure au seuil de vitesse prédéterminé, uniquement lorsque la distance parcourue par le véhicule est supérieure au seuil de distance prédéterminé ou encore uniquement lorsque ces deux conditions sont remplies.

Avantageusement, ledit dispositif d'alerte est configuré pour émettre le signal d'alerte lorsque la ceinture est à l'état non-bouclé et que la vitesse du véhicule, déterminée à partir des données de vitesse du véhicule fournies par le module de géolocalisation, est supérieure à 10 kilomètres/heure.

De manière avantageuse, le module de géolocalisation comprend un module de positionnement par satellite, par exemple un module GPS et/ou un module GNSS. Un intérêt est de permettre de déterminer précisément la position du boitier principal et donc du véhicule dans le référentiel terrestre. La précision des données de positionnement et des données de vitesse du véhicule est donc améliorée, ce qui confère un meilleur contrôle de l'émission du ou des signaux d'alerte.

Préférentiellement, le dispositif d'alerte est configuré pour émettre au moins un signal d'alerte visuel et/ou sonore.

Le signal d'alerte peut être uniquement sonore, uniquement visuel ou encore sonore et visuel.

Le signal d'alerte visuel prend avantageusement la forme d'un objet spécifique affiché sur un écran ou encore l'allumage d'un voyant.

De préférence, le dispositif d'alerte est configuré pour émettre une alerte sonore lorsqu'au moins une des ceintures est à l'état non-bouclé.

Le dispositif d'alerte comprend avantageusement un module sonore, tel qu'un haut-parleur, configuré pour émettre un signal d'alerte sonore.

Selon un aspect avantageux, ledit dispositif d'alerte du boitier principal comprend un écran, le dispositif d'alerte étant configuré pour afficher au moins ledit signal d'alerte sur ledit écran. Le signal d'alerte affiché sur l'écran prend avantageusement la forme d'un objet, d'une icône ou encore d'un pictogramme lumineux sur l'écran.

De préférence, mais de manière non limitative, le dispositif d'alerte est configuré pour afficher sur l'écran un objet associé à la ceinture.

De préférence, le dispositif d'alerte est configuré pour afficher sur l'écran une pluralité d'objets, chacun des objets étant associé à une des ceintures du véhicule.

De préférence, la nature de l'objet est fonction de l'état de bouclage de la ceinture correspondante. Par exemple, le dispositif d'alerte peut être configuré pour afficher un objet de couleur verte représentant une ceinture bouclée, lorsque la ceinture correspondante est effectivement à l'état bouclé, et un objet de couleur rouge représentant une ceinture non-bouclée, lorsque la ceinture correspondante est effectivement à l'état non-bouclé.

Alternativement, et sans sortir du cadre de l'invention, le dispositif d'alerte peut être configuré pour afficher un objet uniquement si la ceinture correspondante est à l'état non-bouclé.

De préférence, ledit au moins un boitier secondaire comprend une batterie électrique, propre audit boitier secondaire, et configurée pour alimenter ledit boitier secondaire en énergie électrique. Un intérêt est qu'il n'est pas nécessaire de relier le boitier secondaire à la batterie du véhicule pour l'alimenter. Le boitier secondaire est donc autonome et son installation à l'intérieur du véhicule est encore facilitée.

En outre, le boitier secondaire est ainsi alimenté de manière continue et permanente, ce qui permet la communication à chaque instant avec le boitier principal.

Avantageusement, ledit émetteur sans-fil et ledit récepteur sans-fil sont des émetteur et récepteur de type radiofréquences, de préférence configurés pour émettre et recevoir des signaux à une fréquence de 433 Mégahertz. Une telle technique de communication sans-fil est particulièrement fiable, limitant les risques de pertes d'information entre l'émetteur et le récepteur et améliorant la fiabilité du ou des signaux d'alerte émis. De préférence, l'émetteur sans fil est configuré pour mettre en oeuvre un protocole avec modulation radio de type FSK 250 Kbps.

Contrairement aux solutions de l'art antérieur qui prévoient l'utilisation d'un smartphone communiquant en Bluetooth avec un boitier secondaire, la technologie radiofréquences permet une communication permanente, et des échanges d'information à tout instant, entre le boitier principal et le boitier secondaire(s), et pas uniquement après allumage et appairage/connexion via Bluetooth du smartphone avec le boitier secondaire. L'utilisation d'une technologie radiofréquence permet en outre l'utilisation de multiples boitiers secondaires communiquant simultanément avec le boitier principal, ce qui n'est pas permis avec la technologie Bluetooth utilisée dans l'art antérieur.

La sécurité conférée par le système selon l'invention est donc améliorée.

La communication sans-fil entre l'émetteur et le récepteur met avantageusement en oeuvre une technique de modulation de fréquence.

De manière avantageuse, ledit émetteur sans-fil du boitier secondaire est configuré pour transmettre sans-fil ledit état de bouclage de la ceinture en réponse à un changement d'état de bouclage de la ceinture.

Un intérêt est de réduire le nombre de transmissions de l'état de bouclage entre l'émetteur sans-fil et le récepteur sans-fil et notamment de ne pas transmettre l'état de bouclage de la ceinture de manière continue, mais uniquement lorsque l'état de bouclage est modifié. Ceci permet de réduire le nombre de signaux émis et la consommation d'énergie de l'émetteur sans-fil et donc de réduire la consommation de la charge d'une éventuelle batterie alimentant le boitier secondaire.

De préférence, ledit émetteur sans-fil du boitier secondaire est configuré pour transmettre sans-fil ledit état de bouclage de la ceinture uniquement en réponse à un changement d'état de bouclage de la ceinture.

De préférence, ledit émetteur sans-fil est configuré pour transmettre des données de changement d'état de bouclage. De préférence, la trame des signaux transmis par l'émetteur sans-fil comprend un indicateur de changement d'état de bouclage de la ceinture correspondante.

Préférentiellement, ledit émetteur sans-fil du boitier secondaire est configuré pour transmettre l'état de bouclage de la ceinture sous la forme de signaux cryptés. Un intérêt est de réduire le risque que les signaux transmis par l'émetteur sans-fil ne puissent être modifiés ou corrompus, améliorant encore la fiabilité des signaux d'alerte émis. Un autre intérêt est d'éviter que des signaux étrangers ne soit traités par le boitier principal, ce qui réduit le risque d'émission de signaux d'alerte intempestifs. Le système de supervision ne peut pas être perturbé par des signaux provenant d'un autre véhicule. La sécurité des utilisateurs du véhicule est donc améliorée.

De préférence, le récepteur sans-fil du boitier principal est configuré pour décrypter lesdits signaux cryptés reçus.

De préférence, le système de supervision comprend en outre un capteur de présence connecté au boitier secondaire et configuré pour détecter un état d'occupation dudit siège, l'émetteur dudit boitier secondaire étant configuré pour transmettre sans-fil ledit état d'occupation du siège, le récepteur sans-fil du boitier principal étant configuré pour recevoir ledit état d'occupation du siège, le dispositif d'alerte étant en outre configuré pour émettre ledit signal d'alerte en fonction dudit état d'occupation du siège reçu par le récepteur. Un intérêt est de conditionner le signal d'alerte, et de préférence son émission, à la présence d'un passager sur le siège. Ceci permet par exemple de ne pas émettre de signal d'alerte inutilement si le siège correspondant n'est pas occupé. Le confort des autres passagers est donc amélioré.

L'état d'occupation du siège est de préférence occupé, lorsqu'un utilisateur est assis sur le siège, ou non-occupé lorsqu'aucun utilisateur n'est assis sur le siège.

De préférence, le dispositif d'alerte est configuré pour ne pas émettre de signal d'alerte relatif à une ceinture de sécurité si le siège correspondant n'est pas occupé.

Alternativement, et sans sortir du cadre de l'invention, le dispositif d'alerte peut être configuré pour émettre un signal d'alerte de nature différente selon que le siège est occupé ou non-occupé.

Le capteur d'occupation peut être un capteur de position, un capteur de pesage ou tout autre capteur permettant d'identifier la présence d'un utilisateur sur un siège.

Avantageusement, le système de supervision est un système pour la supervision du bouclage d'une pluralité de ceintures associées à une pluralité de sièges du véhicule, le système comprenant :
une pluralité de capteurs de bouclage, chacun étant configuré pour détecter un état de bouclage d'une desdites ceintures à laquelle ledit capteur de bouclage est associé; et
une pluralité boitiers secondaires, chacun étant connecté à au moins un capteur de bouclage correspondant, chacun des boitiers secondaires comprenant un émetteur sans-fil configuré pour transmettre sans-fil l'état de bouclage de la ceinture correspondante fournies par le capteur de bouclage associé,
le récepteur sans-fil étant configuré pour recevoir lesdits états de bouclage des ceintures, le dispositif d'alerte étant configuré pour émettre au moins un signal d'alerte en fonction des états de bouclage desdites ceintures reçus par le récepteur et en fonction des données de positionnement et/ou des données de vitesse du véhicule fournies par le module de géolocalisation.

On comprend qu'à chacun desdits sièges est associée une ceinture, un capteur de bouclage et un boitier secondaire. Chacun des émetteurs des boitiers secondaires transmet au boitier principal l'état de bouclage de la ceinture associée audit boitier secondaire.

De préférence, le boitier principal et les boitiers secondaires communiquent selon une configuration en étoile.

De préférence, chacun des boitiers secondaire présente un identifiant propre qui est transmis par l'émetteur sans-fil dudit boitier secondaire avec l'état de bouclage de la ceinture correspondante, permettant au boitier principal d'identifier le boitier secondaire associé à l'état de bouclage qu'il reçoit.

De préférence, le dispositif d'alerte est configuré pour émettre des signaux visuels distincts pour chacune des ceintures.

De préférence, en fonction des données de positionnement et/ou des données de vitesse du véhicule, le dispositif d'alerte est configuré pour émettre au moins un signal sonore si au moins une des ceintures est à l'état non-bouclé.

L'invention porte également sur un procédé de supervision du bouclage d'au moins une ceinture associée à un siège d'un véhicule, ladite ceinture pouvant prendre un état bouclé et un état non-bouclé, le procédé comprenant les étapes suivantes:
- on fournit au moins un boitier secondaire comprenant un émetteur sans-fil ;
- on fournit un boitier principal comprenant un récepteur sans-fil et un module de géolocalisation ;
- on détecte un état de bouclage de ladite ceinture ;
- on transmet sans-fil ledit état de bouclage de la ceinture à l'aide de l'émetteur sans-fil du boitier secondaire;
- on reçoit ledit état de bouclage de la ceinture à l'aide du récepteur sans-fil du boitier principal;
- on détermine des données de positionnement du véhicule et/ou des données de vitesse du véhicule à l'aide du module de géolocalisation; et
- on émet un signal d'alerte en fonction de l'état de bouclage de la ceinture reçu et en fonction des données de positionnement et/ou des données de vitesse du véhicule déterminées.

Avantageusement, on émet le signal d'alerte lorsque la ceinture est à l'état non-bouclé et que la vitesse du véhicule, déterminée à partir des données de vitesse du véhicule fournies par le module de géolocalisation, est supérieure à un seuil de vitesse prédéterminé et/ou que la distance parcourue par le véhicule, déterminée à partir des données de positionnement du véhicule fournies par le module de géolocalisation, par rapport à une position de référence, est supérieure à un seuil de distance prédéterminé.

De préférence, on transmet sans-fil ledit état de bouclage de la ceinture à l'aide de l'émetteur sans-fil du boitier secondaire en réponse à un changement dudit état de bouclage de la ceinture.

### Brève description des dessins

L'invention sera mieux comprise à la lecture de la description qui suit d'un mode de réalisation de l'invention donné à titre d'exemple non limitatif, en référence aux dessins annexés, sur lesquels :
[Fig. 1]la figure 1 montre un véhicule dans lequel est installé un système de supervision selon l'invention ;
[Fig. 2]la figure 2 montre le système de supervision selon l'invention ;
[Fig. 3]la figure 3 montre le boitier principal du système de supervision de la figure 2, lorsque toutes les ceintures sont bouclées; et
[Fig. 4]la figure 4 montre le boitier principal du système de supervision de la figure 2, lorsque une des ceintures n'est pas bouclée.

### Description des modes de réalisation

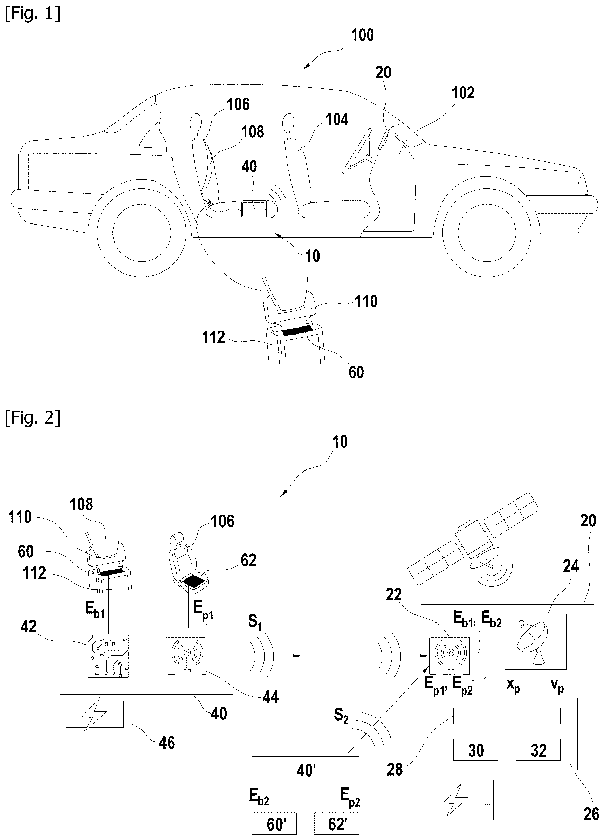

L'invention porte sur un système de supervision du bouclage d'au moins une ceinture de sécurité associée à un siège d'un véhicule. Un mode de réalisation non limitatif va être décrit en référence aux figures **1** à **4****.**

La figure **1** illustre un véhicule **100** dans lequel est installé un système de supervision **10** du bouclage d'au moins une ceinture de sécurité selon l'invention. Le véhicule **100** est ici une voiture comprenant notamment un tableau de bord **102,** un siège avant **104** et un premier siège arrière **106.** Une première ceinture **108** est associée au premier siège arrière **106.** La première ceinture de sécurité **108** comprend notamment une boucle de ceinture **110** configurée pour coopérer avec une base de connexion **112** fixée au sièges.

La première ceinture **108** présente un état de bouclage **E_{b1}**. Elle peut prendre un état bouclé dans lequel la boucle de ceinture **110** est connectée à ladite base de connexion **112.** Elle peut également prendre un état non-bouclé dans lequel ladite boucle de ceinture **110** n'est pas connectée à la base de connexion **112.** La ceinture n'est alors pas attachée.

Dans cet exemple non limitatif, le véhicule **100** comprend en outre un deuxième siège arrière auquel est associée une deuxième ceinture de sécurité. Ces derniers ne sont pas représentés pour des questions de lisibilité. Cette deuxième ceinture présente également un état de bouclage.

Le système de supervision **10** comprend également un boitier principal **20** qui est monté et fixé de manière sensiblement permanente sur le tableau de bord **102** du véhicule. Dans ce mode de réalisation non limitatif, le système de supervision **10** comprend également un premier boitier secondaire **40** qui est ici monté sur le siège arrière.

Le système de supervision **10** comprend de plus un premier capteur de bouclage **60** coopérant avec la base de connexion **112** de la ceinture de sécurité **108**. Le premier capteur de bouclage **60** est relié électroniquement au premier boitier secondaire **40.** Il est configuré pour détecter l'état de bouclage **E_{b1}** de la ceinture.

Tel qu'on le constate en figure **2**, le système de supervision **10** comprend également un premier capteur de présence **62** monté sur le premier siège arrière **106** et configuré pour détecter la présence d'un passager assis sur ledit siège.

On comprend que le premier capteur de bouclage **60**, la première ceinture de sécurité **108** et le premier boitier secondaire **40** sont associés audit premier siège arrière **106.**

Dans cet exemple non limitatif, le système de supervision comprend également un deuxième capteur de bouclage **60'** et un deuxième capteur de présence **62'** reliés à un deuxième boitier secondaire **40'**. Ces derniers ne sont pas visibles en figure **1** mais sont illustrés en figure **2**. Ils sont sensiblement identiques respectivement au premier capteur de bouclage **60**, au premier capteur de présence **62**, et au premier boitier secondaire **40**. On comprend que le deuxième capteur de bouclage **60'**, la deuxième ceinture de sécurité et le deuxième boitier secondaire **40'** sont associés audit deuxième siège arrière.

Le système de supervision va être décrit plus en détails en référence à la figure **2**.

Sur cette figure **2**, on constate que le premier capteur de bouclage **60** est monté sur la base de connexion de la première ceinture **108**. Le premier capteur de bouclage **60** est configuré pour identifier l'état de bouclage **E_{b1}** de la première ceinture **108**. Autrement dit, le premier capteur de bouclage **60** est configuré pour détecter si la première ceinture est à l'état bouclé ou à l'état non-bouclé.

Le premier capteur de bouclage **60** est configuré pour transmettre cet état de bouclage **E_{b1}** au premier boitier secondaire **40**. Plus précisément, dans cet exemple non limitatif, le premier boitier secondaire **40** comprend un calculateur **42** auquel est relié électroniquement le capteur de bouclage **60**. Le calculateur **42** reçoit l'état de bouclage **E_{b1}** de la première ceinture **108**, délivré par le premier capteur de bouclage. Le calculateur **42** est configuré pour traiter ledit état de bouclage **E_{b1}.**

Le premier capteur de bouclage **60** est configuré pour transmettre cet état de bouclage **E_{b1}** au premier boitier secondaire **40.**

Par ailleurs, le premier capteur de présence **62** est connecté au premier boitier secondaire **40** et configuré pour détecter un état d'occupation **Eₚ₁** dudit siège et fournir ledit état d'occupation au premier boitier secondaire et notamment au calculateur **42**.

Le premier boitier secondaire **40** comprend une batterie **46** configurée pour alimenter le premier boitier secondaire en énergie électrique. La batterie est une batterie propre au premier boitier secondaire **40**, distincte de la batterie du véhicule **100**. Le calculateur **42** est avantageusement configuré pour contrôler la charge de la batterie **46**.

Selon l'invention, le premier boitier secondaire **40** comprend en outre un émetteur sans-fil **44** relié au calculateur **42.** L'émetteur sans-fil **44** est configuré pour émettre des signaux **S₁**. Dans cet exemple non-limitatif, l'émetteur sans-fil **44** est un émetteur radiofréquence, configuré pour émettre des signaux à une fréquence de 433 Mégahertz. L'émetteur sans-fil **44** reçoit l'état de bouclage **E_{b1}**, provenant de capteur de bouclage **60**, et l'état d'occupation **Eₚ₁** provenant du capteur de présence **62**, éventuellement traités par le calculateur **42**.

De préférence, les signaux **S₁** transmis par l'émetteur sans-fil **44** du premier boitier secondaire **40** comprennent une trame générée par le calculateur **42**. De manière non limitative, ladite trame comprend ici l'état de bouclage **E_{b1}** de la première ceinture **108**, l'état d'occupation **Eₚ₁** du premier siège **106**, une adresse unique associée au premier boitier secondaire **40**, des données relatives au niveau de charge de la batterie **46** du premier boitier secondaire et un indicateur de changement d'état de bouclage **E_{b1}** de la ceinture **108**.

Ladite adresse associée au premier boitier secondaire **40** est une adresse unique de détrompage permettant d'identifier et de discriminer ledit premier boitier secondaire lorsque le système de supervision **10** comprend plusieurs boitiers secondaires.

Dans cet exemple non-limitatif, l'émetteur sans-fil **44** est configuré pour transmettre le signal **S₁** et donc l'état de bouclage de la première ceinture **108** uniquement en réponse à un changement dudit état de bouclage de la première ceinture. Un intérêt est de réduire la quantité de signaux émis et donc d'économiser la charge de la batterie **46**.

Le deuxième capteur de bouclage **60'** est configuré pour détecter un état de bouclage **E_{b2}** de la deuxième ceinture et fournir ledit état de bouclage au deuxième boitier secondaire **40'**. Le deuxième capteur de présence **62'** est configuré pour détecter un état d'occupation **E_{b2}** du deuxième siège arrière et fournir ledit état d'occupation au deuxième boitier secondaire **40'.** Le deuxième boitier secondaire **40'** est identique au premier boitier secondaire **40** et ne sera pas décrit en détails. Le deuxième boitier secondaire **40'** est configuré pour émettre sans-fil des signaux **S₂** de manière à transmettre sans-fil l'état de bouclage **E_{b2}** de la deuxième ceinture et l'état d'occupation **Eₚ₂** du deuxième siège arrière en direction du boitier principal **20**.

Les premier et deuxième boitiers secondaires **40**,**40'** communiquent sans-fil avec le boitier principal **20** selon une configuration en étoile.

Sur la figure **2**, on constate par ailleurs que le boitier principal **20** comprend un récepteur sans-fil **22**. Le récepteur sans-fil est configuré pour recevoir les signaux **S₁** et **S₂** émis par l'émetteur sans-fil **44** et donc pour recevoir l'état de bouclage de la ceinture **108**. Le récepteur sans-fil **22** est un récepteur radiofréquence, configuré pour recevoir des signaux à une fréquence de 433 Mégahertz. Les signaux transmis sont cryptés.

A réception d'un signal **S₁,S₂** provenant des premier ou deuxième boitier secondaire **40,40'**, le récepteur sans-fil **22** est configuré pour émettre un signal d'accusé de réception en direction du boitier secondaire correspondant.

Le récepteur sans-fil **22** est en outre configuré pour identifier le boitier secondaire **40** ayant émis le signal reçu et pour ne pas traiter des signaux non identifiés.

Le boitier principal **20** comprend également un module de géolocalisation **24**, formé ici par un module GPS, configuré pour recueillir et déterminer des données de positionnement **xₚ** du véhicule **100** et des données de vitesse **vₚ** du véhicule. Le module de géolocalisation **24** est configuré pour établir une communication satellitaire afin de recueillir les données de positionnement et de vitesse. Dans cet exemple non limitatif, le module de géolocalisation **24** est configuré pour déterminer la vitesse instantanée **vₚ** du boitier principal **20**, et donc du véhicule **100**. Le module de géolocalisation **24** est en outre configuré pour déterminer à chaque instant la position **xₚ** du boitier principal **20**, et donc du véhicule **100**, considérée dans le référentiel terrestre.

Le module de géolocalisation **24** est propre au boitier principal **20** et au système de supervision **10**. Il est distinct d'un éventuel module de géolocalisation du véhicule **100**.

Le boitier principal **20** comprend également un dispositif d'alerte **26** comprenant une unité de calcul **28**. Le dispositif d'alerte est relié électriquement au récepteur sans-fil **22** et au module de géolocalisation **24**.

Le récepteur sans-fil **22** est configuré pour transmettre les états de bouclage **E_{b1},E_{b2}** des premier et deuxième boitiers secondaires **40**,**40'** reçus au dispositif d'alerte **26**, et plus précisément à l'unité de calcul **28**. Le récepteur sans-fil **22** est en outre configuré pour transmettre les états d'occupation **Eₚ₁,Eₚ₂** des premier et deuxième sièges du véhicule reçus au dispositif d'alerte **26**, et plus précisément à l'unité de calcul **28**.

Le module de géolocalisation **24** est configuré pour transmettre lesdites données de positionnement **xₚ** et lesdites données de vitesse **vₚ** du véhicule **100** déterminées au dispositif d'alerte **26**, et plus précisément à l'unité de calcul **28**.

L'unité de calcul **28** du dispositif d'alerte **24** comprend avantageusement une mémoire permettant notamment d'enregistrer les différentes positions du véhicule dans le référentiel terrestre au cours du temps. L'unité de calcul **28** est avantageusement configurée pour déterminer un trajet parcouru par le véhicule et une trajectoire du véhicule à partir desdites positions enregistrées et notamment par rapport à une ou plusieurs position(s) de référence.

Selon l'invention, le dispositif d'alerte **26** est configuré pour émettre des signaux d'alerte en fonction des données de positionnement **xₚ** du véhicule et des données de vitesse **vₚ** du véhicule transmises par le module de géolocalisation **24**, ainsi qu'en fonction de l'état de bouclage **E_{b1}** et de l'état d'occupation **Eₚ₁** provenant du premier boitier secondaire **40** et reçus par le récepteur sans-fil **22** et de l'état de bouclage **E_{b2}** et de l'état d'occupation **Eₚ₂** provenant du deuxième boitier secondaire **40'** et reçus par le récepteur sans-fil **22.**

Plus précisément, dans ce mode de réalisation non-limitatif, le dispositif d'alerte **26** comprend un écran **30** permettant d'afficher des signaux d'alerte visuels, ainsi qu'un haut-parleur **32** configuré pour générer des signaux d'alerte sonores.

Le boitier principal **20** est ici alimenté en énergie électrique en continu, et de manière permanente, par la batterie du véhicule **100**. Un intérêt est de permettre son fonctionnement, quand bien même le véhicule serait à l'arrêt.

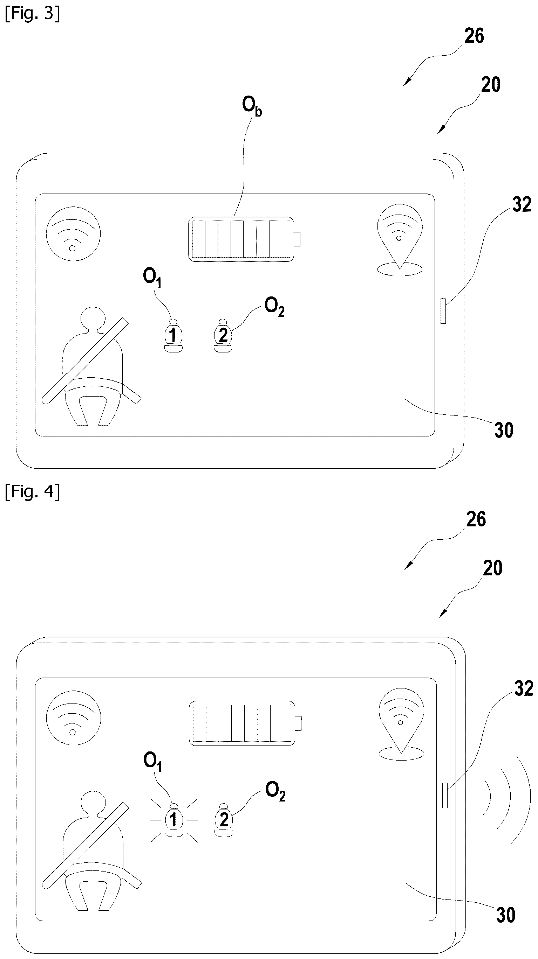

La figure **3** montre l'écran **30** et le haut-parleur **32** du dispositif d'alerte **26** du boitier principal **20**. L'écran **30** est ici configuré pour afficher un premier objet **O₁** associé à la première ceinture **108** et un deuxième objet **O₂** associé à la deuxième ceinture. En l'absence d'alerte, les deux objets sont avantageusement non-éclairés et affichés en gris. Alternativement, les objets pourraient être affichés en vert.

L'écran **30** permet en outre d'afficher un objet **O_{b}** illustrant la charge de la batterie.

Le dispositif d'alerte **26** est configuré pour émettre un premier signal d'alerte visuel pour la première ceinture correspondant ici à un affichage en couleur rouge du premier objet **O₁** sur l'écran **30**. Le dispositif d'alerte est configuré pour émettre un deuxième signal d'alerte visuel pour la deuxième ceinture correspondant ici à un affichage en couleur rouge du deuxième objet **O₂** sur l'écran **30**.

Le dispositif d'alerte **26** est en outre configuré pour émettre des signaux d'alerte sonore consistant en une alerte sonore ou une tonalité émise par le haut-parleur **32**, qui est fonction de l'état de bouclage **E_{b1},E_{b2}** des deux ceintures.

Le dispositif d'alerte **26** est configuré pour émettre des signaux d'alerte lorsqu'une ceinture est à l'état non-bouclé et que la vitesse **vₚ** du véhicule est supérieure à un seuil de vitesse prédéterminé ou que la distance parcourue par le véhicule, par rapport à une position de référence, est supérieure à un seuil de distance prédéterminé.

La position de référence correspond à la position initiale du véhicule **100** au moment de l'allumage du moteur, déterminée à partir du module de géolocalisation **24**. La distance parcourue par le véhicule **100** par rapport à la position de référence est calculée par l'unité de calcul **28** du dispositif d'alerte à partir des données de positionnement déterminées par le module de géolocalisation **24**.

Nous allons maintenant détailler plusieurs situations illustrant un mode de mise en oeuvre du système de supervision **10** selon l'invention, en référence aux figures **3** et **4**.

Ici, le dispositif d'alerte **26** est configuré pour émettre des signaux d'alerte lorsqu'une ceinture est à l'état non-bouclé et que la vitesse **vₚ** du véhicule est supérieure à 10 kilomètres/heure ou que la distance parcourue par le véhicule **100**, par rapport à la position initiale du véhicule à l'allumage du moteur, est supérieure à 50 mètres.

Dans ces exemples, on considère que des passagers sont assis sur les deux sièges arrière, et les premier et deuxième sièges sont donc à l'état d'occupation **Eₚ₁**,**Eₚ₂** occupé.

La figure **3** montre l'écran **30** du dispositif d'alerte **26**, lorsque les première **108** et deuxième ceintures sont attachés et que les premier et deuxième états de bouclage **E_{b1},E_{b2}** sont de type bouclés. Dans cette configuration, le dispositif d'alerte **26** reçoit les états de bouclage **E_{b1},E_{b2}** qui sont bouclés. Le dispositif d'alerte **26** affiche les premier et deuxième objets **O₁,O₂** associés aux première et deuxième ceintures en gris sur l'écran. En outre, le haut-parleur n'émet aucun son. Autrement dit, quelles que soient les données de positionnement **xₚ** et de vitesse **vₚ** du véhicule, aucun signal d'alerte n'est émis.

En outre, tant que les deux états de bouclage **E_{b1},E_{b2}** restent inchangés, les émetteurs sans-fil **44** des boitiers secondaires **40**,**40'** sont configurés pour ne pas émettre de signaux en direction du boitier principal **20**.

En référence à la figure **4**, on considère désormais que le passager occupant le premier siège **106** détache sa première ceinture **108**. Le premier état de bouclage **E_{b1}** devient non-bouclé, l'émetteur sans-fil **44** du premier boitier secondaire **40** transmet alors un signal **S₁** contenant ledit premier état de bouclage non bouclé de la première ceinture, en réponse à ce changement de l'état de bouclage **E_{b1}**. Le premier état de bouclage est reçu par le récepteur sans-fil **22** qui envoie en réponse un signal d'accusé de réception de la bonne réception de l'état de bouclage. A l'aide de l'adresse unique du boitier secondaire **40** transmise dans le signal avec l'état de bouclage **E_{b1},** le boitier principal **20** identifie la provenance du signal et donc la ceinture dont l'état est non-bouclé. Le premier état de bouclage **E_{b1}** est transmis par le récepteur sans-fil **22** au dispositif d'alerte.

Dès lors, si le véhicule **100** roule à une vitesse, déterminée à partir des données de vitesse **vₚ**, inférieure au seuil de vitesse fixé à 10 kilomètres/heure (km/h) et si la distance qu'il a parcourue depuis la position initiale, déterminée à partir des données de positionnement **xₚ**, est inférieure au seuil de distance fixé à 50 mètres, le dispositif d'alerte n'émet toujours aucun signal d'alerte. Un intérêt est d'améliorer le confort des passagers en n'émettant pas de signaux d'alerte si le véhicule ne roule pas sur la voie publique notamment, ou roule par exemple sur un parking.

En revanche, si le véhicule roule à plus de 10 km/h ou si ladite distance parcourue est supérieure à 50 mètres, alors le dispositif d'alerte **26** émet des signaux d'alerte, en l'espèce un signal d'alerte visuel et un signal d'alerte sonore. Cette configuration est illustrée en figure **4**. Le signal d'alerte visuel émis consiste en l'affichage en rouge du premier objet **O₁** associé à la première ceinture **108.** Le signal sonore émis consiste en une alerte sonore continue ou discontinue.

De même, dans le cas où la deuxième ceinture est détachée, le dispositif d'alerte **26** est configuré pour émettre un signal d'alerte sonore et pour afficher le deuxième objet **O₂** en rouge, si toutefois le véhicule roule à plus de 10 km/h ou si ladite distance parcourue depuis la position de référence est supérieure à 50 mètres.

## Revendications

1. Système de supervision (10) du bouclage d'au moins une ceinture (108) associée à un siège (106) d'un véhicule (100), ladite ceinture pouvant prendre un état bouclé et un état non-bouclé, le système comprenant :
- au moins un capteur de bouclage (60,60') configuré pour détecter un état de bouclage (E_{b1},E_{b2}) de ladite ceinture ;
- au moins un boitier secondaire (40,40') connecté audit capteur de bouclage, le boitier secondaire comprenant un émetteur sans-fil (44) configuré pour transmettre sans-fil ledit état de bouclage de la ceinture fourni par le capteur de bouclage ;
- un boitier principal (20) configuré pour être positionné à proximité du tableau de bord (102) du véhicule et comprenant :
un récepteur sans-fil (22) configuré pour recevoir ledit état de bouclage de la ceinture transmis par l'émetteur du boitier secondaire ;
un module de géolocalisation (24) configuré pour déterminer des données de positionnement (xₚ) du véhicule et/ou des données de vitesse (vₚ) du véhicule ; et
un dispositif d'alerte (26) configuré pour émettre au moins un signal d'alerte en fonction de l'état de bouclage de la ceinture reçu par le récepteur et en fonction des données de positionnement et/ou des données de vitesse du véhicule fournies par le module de géolocalisation.

2. Système de supervision selon la revendication 1, dans lequel le dispositif d'alerte (26) est configuré pour émettre le signal d'alerte lorsque la ceinture (108) est à l'état non-bouclé et que la vitesse du véhicule, déterminée à partir des données de vitesse (vₚ) du véhicule fournies par le module de géolocalisation (24), est supérieure à un seuil de vitesse prédéterminé et/ou que la distance parcourue par le véhicule, déterminée à partir des données de positionnement (xₚ) du véhicule fournies par le module de géolocalisation, par rapport à une position de référence, est supérieure à un seuil de distance prédéterminé.

3. Système de supervision selon la revendication 1 ou 2, dans lequel ledit dispositif d'alerte (26) est configuré pour émettre le signal d'alerte lorsque la ceinture (108) est à l'état non-bouclé et que la vitesse du véhicule, déterminée à partir des données de vitesse (vₚ) du véhicule fournies par le module de géolocalisation (24), est supérieure à 10 kilomètres/heure.

4. Système de supervision selon l'une quelconque des revendications 1 à 3, dans lequel le module de géolocalisation (24) comprend un module de positionnement par satellite, par exemple un module GPS et/ou un module GNSS.

5. Système de supervision selon l'une quelconque des revendications 1 à 4, dans lequel le dispositif d'alerte (26) est configuré pour émettre au moins un signal d'alerte visuel et/ou sonore.

6. Système de supervision selon la revendication 5, dans lequel ledit dispositif d'alerte (26) du boitier principal (20) comprend un écran (30), le dispositif d'alerte étant configuré pour afficher au moins ledit signal d'alerte sur ledit écran.

7. Système de supervision selon l'une quelconque des revendications 1 à 6, dans lequel ledit au moins un boitier secondaire (40,40') comprend une batterie électrique (46), propre audit boitier secondaire, et configurée pour alimenter ledit boitier secondaire en énergie électrique.

8. Système de supervision selon l'une quelconque des revendications 1 à 7, dans lequel ledit émetteur sans-fil (44) et ledit récepteur sans-fil (22) sont des émetteur et récepteur de type radiofréquences, de préférence configurés pour émettre et recevoir des signaux à une fréquence de 433 Mégahertz.

9. Système de supervision sur l'une quelconque des revendications 1 à 8, dans lequel ledit émetteur sans-fil (44) du boitier secondaire (40,40') est configuré pour transmettre sans-fil ledit état de bouclage (E_{b1},E_{b2}) de la ceinture en réponse à un changement d'état de bouclage de la ceinture.

10. Système de supervision selon l'une quelconque des revendications 1 à 9, dans lequel ledit émetteur sans-fil (44) du boitier secondaire (40,40') est configuré pour transmettre l'état de bouclage (E_{b1},E_{b2}) de la ceinture sous la forme de signaux cryptés.

11. Système de supervision selon l'une quelconque des revendications 1 à 10, comprenant en outre un capteur de présence (62,62') connecté au boitier secondaire (40,40') et configuré pour détecter un état d'occupation (Eₚ₁,Eₚ₂) dudit siège, l'émetteur (44) dudit boitier secondaire étant configuré pour transmettre sans-fil ledit état d'occupation du siège, le récepteur (22) du boitier principal (10) étant configuré pour recevoir ledit état d'occupation du siège, le dispositif d'alerte (26) étant en outre configuré pour émettre ledit signal d'alerte en fonction dudit état d'occupation du siège reçu par le récepteur.

12. Système de supervision (10) selon l'une quelconque des revendications 1 à 11, pour la supervision du bouclage d'une pluralité de ceintures (108) associées à une pluralité de sièges (106) du véhicule (100), le système comprenant :
une pluralité de capteurs de bouclage (60,60'), chacun étant configuré pour détecter un état de bouclage (E_{b1},E_{b2}) d'une desdites ceintures à laquelle ledit capteur de bouclage est associé; et
une pluralité de boitiers secondaires (40,40'), chacun étant connecté à au moins un capteur de bouclage correspondant, chacun des boitiers secondaires comprenant un émetteur sans-fil (44) configuré pour transmettre sans-fil l'état de bouclage de la ceinture correspondante fournies par le capteur de bouclage associé,
le récepteur sans-fil étant configuré pour recevoir lesdits états de bouclage des ceintures, le dispositif d'alerte étant configuré pour émettre au moins un signal d'alerte en fonction des états de bouclage desdites ceintures reçus par le récepteur et en fonction des données de positionnement (xₚ) et/ou des données de vitesse (vₚ) du véhicule fournies par le module de géolocalisation.

13. Système de supervision selon la revendication 12, dans lequel chacun des boitiers secondaires (40,40') présente un identifiant propre qui est transmis par l'émetteur sans-fil (44) dudit boitier secondaire avec l'état de bouclage (E_{b1},E_{b2}) de la ceinture correspondante, permettant au boitier principal (20) d'identifier le boitier secondaire associé à l'état de bouclage qu'il reçoit.

14. Procédé de supervision du bouclage d'au moins une ceinture (108) associée à un siège (106) d'un véhicule (100), ladite ceinture pouvant prendre un état bouclé et un état non-bouclé, le procédé comprenant les étapes suivantes:
- on fournit au moins un boitier secondaire (40,40') comprenant un émetteur sans-fil (44);
- on fournit un boitier principal (20) comprenant un récepteur sans-fil (22) et un module de géolocalisation (24);
- on détecte un état de bouclage (E_{b1},E_{b2}) de ladite ceinture ;
- on transmet sans-fil ledit état de bouclage de la ceinture à l'aide de l'émetteur sans-fil du boitier secondaire;
- on reçoit ledit état de bouclage de la ceinture à l'aide du récepteur sans-fil du boitier principal;
- on détermine des données de positionnement (xₚ) du véhicule et/ou des données de vitesse (vₚ) du véhicule à l'aide du module de géolocalisation; et
- on émet un signal d'alerte en fonction de l'état de bouclage de la ceinture reçu et en fonction des données de positionnement et/ou des données de vitesse du véhicule déterminées.

15. Procédé de supervision selon la revendication 14, dans lequel on émet le signal d'alerte lorsque la ceinture (108) est à l'état non-bouclé et que la vitesse du véhicule, déterminée à partir des données de vitesse (vₚ) du véhicule fournies par le module de géolocalisation, est supérieure à un seuil de vitesse prédéterminé et/ou que la distance parcourue par le véhicule, déterminée à partir des données de positionnement (xₚ) du véhicule fournies par le module de géolocalisation, par rapport à une position de référence, est supérieure à un seuil de distance prédéterminé.

16. Procédé de supervision selon la revendication 14 ou 15, dans lequel on transmet sans-fil ledit état de bouclage (E_{b1},E_{b2}) de la ceinture (108) à l'aide de l'émetteur sans-fil (44) du boitier secondaire (40,40') en réponse à un changement dudit état de bouclage de la ceinture.
